# EUROPEAN PATENT APPLICATION

(11) **EP 4 059 463 A1**
(43) Date of publication of application: **21.09.2022**
(21) Application number: 21162850.8
(22) Date of filing: 16.03.2021
(51) Int. Cl.: A61C 3/00

(54) **APPLICATOR AND METHOD OF FORMING AN APPLICATOR**

(71) Applicant: medmix Switzerland AG, 9469 Haag (Rheintal) (CH)
(72) Inventor: Moser, Josef, 5726 Unterkulm (CH)
(74) Representative: Manitz Finsterwald Patent- und Rechtsanwaltspartnerschaft mbB

(57) **Abstract**

The present invention relates to an applicator, in particular a dental applicator, the applicator comprising an applicator head with an applicator and an elongate body part, wherein the applicator is made from two parts of different material and comprises two kinks, with one of the two kinks being arranged at a part of the applicator where the two different parts at least partially overlap one another. The invention further relates to a method of forming an applicator.

## Description

The present invention relates to an applicator, in particular to a dental applicator, the applicator comprising an applicator head with an applicator and an elongate body part, wherein the applicator is made from two parts of different material and comprises two kinks, with one of the two kinks being arranged at a part of the applicator where the two different parts at least partially overlap one another. The invention further relates to a method of forming an applicator.

Applicators are well known, particularly in the dental and medical field for treating e.g. a patient's gums, his teeth, spaces between the teeth or the like. The applicators can be used to apply fluids, such as cremes, medicinal fluids, ointments and the like to parts of a patient's mouth or body.

For carrying out the various tasks, the applicators generally have an application tip that is configured to carry out the precise application. For example, brushes are known for cleaning between a patient's teeth, also foams are also known for applying a dental or medical fluid at an area of the mouth. Particularly with regard to hard to reach areas of the mouth it is desirable to provide an applicator that can be deformed for the specific application and that reliably maintains its shape after deformation.

Moreover, the application tips need to be secured to the handle of the applicator such that neither the application tip nor parts thereof fall off in use of the applicator.

For this reason it is an object of the present invention to make available an applicator that is simple to use, that maintains its shape and form in use and that does not loose parts thereof in use.

This object is satisfied by the subject matter of claim 1.

For example, such an applicator, in particular a dental applicator, comprises an applicator head with an application tip and an elongate body part, wherein the applicator is made from two parts of different material and comprises two kinks, with one of the two kinks being arranged at a part of the applicator where the two different parts at least partially overlap one another.

By forming the applicator of two parts, in particular only two parts, avoids parts of the applicator from becoming detached during use so that an applicator is made available that does not lose any particles in use.

Moreover, by forming the applicator of two parts of different material, each part can be tailored to its specific use.

For example, the provision of an elongate body part as a handle enables a good tactile control of the application tip during the use of the applicator specifically if this is made of a harder, less flexible material and hence a more robust material than the applicator head.

Moreover, the provision of an applicator head with an application tip that is e.g. integrally formed in one piece with the application tip reduces the number of different components of an applicator and hence reduces the risk of losing parts of the applicator on use thereof.

Such an applicator head formed of a second material can for example be formed of a material that is softer and/or more flexible than a material of the elongate body part and hence be used more effectively for the specific application.

The provision of two kinks enables the production of an applicator that can easily be deformed for the specific use of the applicator so as to reach hard to reach areas in the mouth of a patient.

By forming one of the two kinks in a region of the applicator where the two parts thereof overlap one another provides the applicator with an increased stability at this part of the applicator resulting in an applicator that can be deformed in a shape stable manner, with this change in shape also being maintained during the use of the applicator for improved application results.

One of the two parts made from a different material may be the elongate body part and the other of the two parts made from a different material may be the applicator head, preferably with the applicator head comprising the application tip that is integrally formed thereat. An applicator having such a design is more stable in use and avoids the problems of the prior art associated with losing parts thereof.

Some of the applicator head may overlap some of the elongate body part. In this way an applicator can be formed, e.g. in an injection molding process or an additive manufacturing process with the two parts being non-releasably attached to one another during normal use of the applicator.

A cross-section of the elongate body part along at least a majority of a length of the elongate body part is formed at least substantially by one of a triangle and a Reuleaux triangle or is formed by one of a triangle and a Reuleaux triangle. Forming the applicator in this way ensures that this does not role on a surface on which it is placed causing the application tip from being contaminated in use necessitating the use of a further applicator increasing the time and cost of a treatment.

In this connection a majority means more than half of a length of the elongate body part, specifically more than 70% and preferably more than 85% of a length of the elongate body part.

The application tip may comprise one of a brush with bristles and a foam. Such application tips can be reliably used for different medical and dental applications.

The application tip may be configured to store a liquid thereat. In this way a dental fluid can be introduced into the mouth of a patient for treatment of a target site, or unwanted fluid can be removed from a patient following a successful treatment of the patient. By way of example the application tip can be configured to store between 6 and 15 mg of dental fluid, preferably between 8 and 12 mg of dental fluid.

One of the two kinks may be arranged directly adjacent to that part of the elongate body part that is formed at least substantially by the Reuleaux triangle or the triangle. In this way one of the kinks can be formed at a part made of material that is stable in shape and form even after it has been deformed.

The application tip may be a brush with bristles, with the brush and bristles being formed by at least one of a thermoplastic elastomer (TPE), a thermoplastic polyurethane (TPU), a thermoplastic vulcanizate (TPV), and a thermoplastic olefin elastomer (TPO). In this way a simple to use applicator can be made available.

By way of example such materials can be Santoprene 8281, further examples of TPE materials that come from block copolymers group are amongst others CAWITON, THERMOLAST K, THERMOLAST M, Arnitel, Hytrel, Dryflex, Mediprene, Kraton, Pibiflex, Sofprene, and Laprene. Out of these styrenic block copolymers (TPE-s) are CAWITON, THERMOLAST K, THERMOLAST M, Sofprene, Dryflex and Laprene. Laripur, Desmopan or Elastollan are examples of thermoplastic polyurethanes (TPU). Sarlink, Santoprene, Termoton, Solprene, THERMOLAST V, Vegaprene or Forprene are examples of TPV materials. Examples of thermoplastic olefin elastomers (TPO) compound are For-Tec E, Engage and Ninjaflex.

The two kinks may be configured to be bent in one direction, in particular in only direction, especially such that the application tip may face upwardly relative to the elongate body part. This means that the applicator may be bent in one direction at each kink so that a hook shaped applicator or the like is formed in use providing sufficient degrees of freedom of use of the applicator.

At least one of the two kinks may be configured as a peripherally extending groove, for example, the groove has a round, circular, oval, triangular cross-section transverse to a longitudinal axis of the applicator. The provision of an applicator with such grooves enables the applicator to be bent by 360° relative to the longitudinal axis so that the user thereof can manipulate the position of the application tip for his specific desired use.

The applicator head may be made from a material different from the elongate body part. For example, the applicator head may be made from a material that is softer and/or more flexible than a material of the elongate body part. This means that the applicator head can be tailored to the specific use of the applicator.

The elongate body part may be made from one of polypropylene and polylactide. Such plastics are stable in shape and size also after they have experienced a certain deformation.

The applicator head may comprise a material selected from the group of members consisting of a thermoplastic elastomer (TPE), a thermoplastic polyurethane (TPU), a thermoplastic vulcanizate (TPV), a thermoplastic olefin elastomer (TPO), polyethylene (PE), polypropylene (PP), poly vinyl chloride (PVC), polyurethane (PU), polystyrene (PS) and combinations of the foregoing. Such thermoplastic elastomers are flexible and soft in use for, e.g. dental applications and also permit the storage of fluid thereat.

The applicator head may be configured to receive a part of the elongate body part. This means that parts of the elongate body part may extend into and possibly through some of the applicator head for improved attachment of the applicator head at the elongate body part.

The part of the elongate body part received within the applicator head may comprise one or more centering elements, for example, two groups of centering elements are provided that are axially spaced apart from one another. The centering elements enable the precise positioning of the applicator head at the elongate body part and may also provide a security against rotation in order to prevent a rotation of the applicator head relative to the elongate body part.

One of the kinks may be arranged at that part of the applicator head and that part of the elongate body part that is received within the applicator head. In this way the second kink is also provided in that part of the applicator that has the harder and more rigid material properties than the applicator head.

The application tip may be a foam application tip made from an open cell foam having pores. Such an application tip can be used to distribute dental or medical fluids in an expedient manner.

According to a further aspect the present invention relates to a method of forming an applicator, in particular a dental applicator, the applicator comprising an applicator head with an application tip and an elongate body part, wherein the applicator is made from two parts of different material and comprises two kinks, with one of the two kinks being arranged at a part of the applicator where the two different parts at least partially overlap one another, the method comprising the steps of injection molding the elongate body part and then injection molding the applicator head with parts of the applicator head being overmolded onto parts of the elongate body part.

In this way the applicator can be manufactured in a fast, facile and cost effective manner.

Further embodiments of the invention are described in the following description of the figures and/or the dependent claims attached to this specification. The invention will be explained in the following in detail by means of embodiments and with reference to the drawing in which is shown:
- Figs. 1a & b: side views of an applicator and an elongate body part thereof;
- Fig. 2: view of an applicator head of the applicator of Fig. 1a;
- Figs. 3a & b: a side view and a perspective view of a connecting portion of the elongate body part of Fig. 1b;
- Figs. 4a &B: a front view of the applicator of Fig. 1a and a view of the circumference of the elongate body part of Fig. 1b;
- Fig. 5: a view of a further applicator head;
- Fig. 6: a view of a further applicator head; and
- Fig. 7: a view of a further applicator head.

In the following the same reference numerals will be used for parts having the same or equivalent function. Any statements made having regard to the direction of a component are made relative to the position shown in the drawing and can naturally vary in the actual position of application.

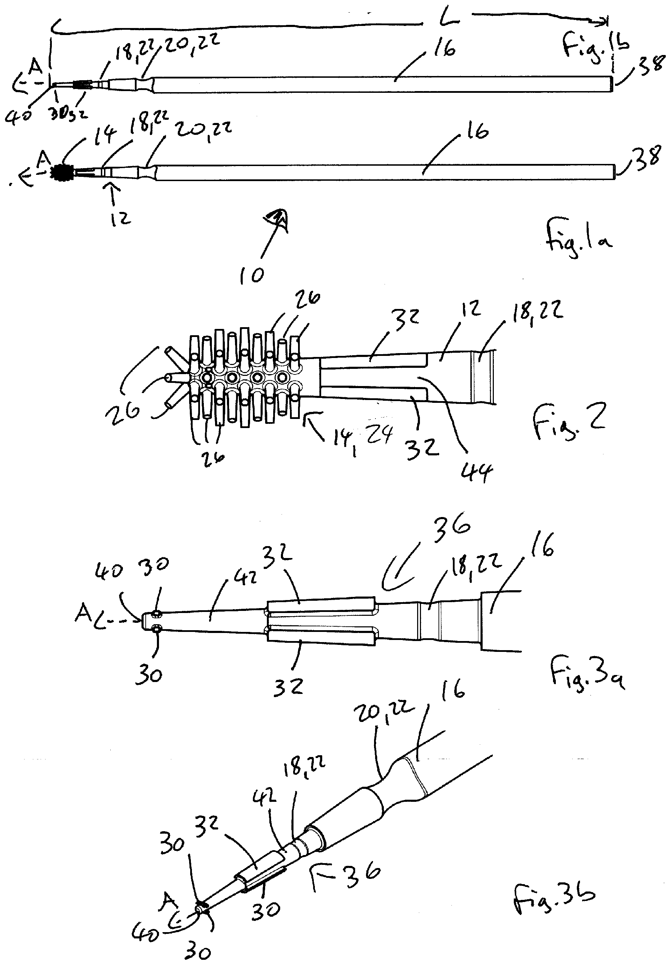

Fig. 1a shows an applicator 10. The applicator 10 comprises an applicator head 12 with an application tip 14 and an elongate body part 16. The applicator 10 is made from two parts 16, 12 of different material. One of the two parts made from a different material is the elongate body part 16 and the other of the two parts 16, 12 made from a different material is the applicator head 12.

The applicator further comprises first and second kinks 18, 20, with one of the two kinks 18 being arranged at a part of the applicator 10 where the two different parts 12, 16 at least partially overlap one another.

The application tip 14 comprises a brush 24 with a plurality of bristles 26. The bristles 26 are dimensioned for the specific application. The brush 24 and the bristles 26 are formed by a thermoplastic elastomer (TPE). The application tip 14 is configured to store between 5 and 15 mg of a liquid (not shown) thereat.

In this connection it should be noted that a hardness of the application head 12 and of the application tip 14 may be selected in the hardness range 20 Shore OO up to 90 Shore A.

The bristles 26 may have a diameter selected in the range of 0.1 to 1 mm and/or a length selected in the range of 0.2 to 4 mm.

The bristles 26 may be of cylindrical shape or have the shape of a truncated cone, with the diameter then being the diameter at half of the length of the bristle 26.

The number of bristles may be selected in the range of 20 to 100, preferably in the range of 30 to 50.

Fig. 1b shows a side view of the elongate body part 16. A cross-section of the elongate body part 16 is formed by a Reuleaux triangle between the second kink 20 and a rear end 38. The elongate body part 16 may have this shape over 60 to 85% of a length L thereof, preferably over 75 to 80 % of its length.

The applicator head 12 is made from a material different from the elongate body part 16. The elongate body part 16 may be made from one of polypropylene PP and polylactide PLA.

In this connection it should be noted that a hardness of the elongate body part 16 may be selected in the hardness range Shore D hardness between 45 and 96, preferably between 70 and 90 shore D hardness.

A front end 40 of the elongate body part 16 comprises first and second types of centering elements 30, 32 that are used on molding the applicator head 12 over and onto some of the elongate body part 16 to center the applicator head 12 at the elongate body part 16 and to provide a security against rotation at the elongate body part 16 in order to prevent a rotation of the applicator head 12 relative to the elongate body part 16 in use thereof.

The applicator head is molded over some of the elongate body part 16 with a layer thickness selected in the range of 0.05 to 3 mm, preferably within the range of 0.1 to 2 mm.

Fig. 2 shows an enlarged view of the brush 24 of the applicator 10 of Fig. 1. The second type of centering elements 32 are visible as these not only extend into the applicator head 12, but also through the applicator head 12.

In contrast to this the first type of centering elements 30 only extend into the applicator head 12 but not through the applicator head 12.

A height of the first and second types of centering elements 30, 32 in a direction transverse to the longitudinal axis A, may be selected in the range of 0.05 to 3 mm, preferably in the range of 0.1 to 2 mm.

In this connection it should be noted that a length of the first type of centering elements 30 transverse to the longitudinal axis A may be selected in the range of 0.1 to 10 mm, preferably in the range of 0.3 to 5 mm.

In this connection it should be noted that a width of the first type of centering elements 30 in parallel to the longitudinal axis A may be selected in the range of 0.01 to 5 mm, preferably in the range of 0.05 to 1 mm.

In this connection it should be noted that a length of the second type of centering elements 32 along the longitudinal axis A may be selected in the range of 0.1 to 5 cm, preferably in the range of 0.3 to 2 cm.

In this connection it should be noted that a width of the second type of centering elements 32 along the longitudinal axis A may be selected in the range of 0.1 to 10 mm, preferably in the range of 0.5 to 5 mm.

The second type of centering elements 32 are arranged between the application tip 14 and the first kink 18.

Both the first and second types of centering elements 30, 32 are formed as rectangular structures that engage the applicator head and prevent a movement thereof relative to the elongate body part 16.

On forming the applicator head 12 over the elongate body part 16 one forms a continuous outer surface 44 of the applicator 10, with an outer part of the second type of centering elements 32 forming a part of the continuous outer surface 44.

The applicator head 12 tapers in diameter between the second kink 20 and the application tip 14.

Fig. 3a shows a side view of the elongate body part 16 and Fig. 3b shows a perspective view of a connecting portion 36 of the elongate body part 16. The applicator head 12 is injection molded over the elongate body part 16 over the length of the connecting portion. A length of the connecting portion 36 is selected as 10 to 30 % of a length L of the elongate body part 16 between the front end 40 and the rear end 38.

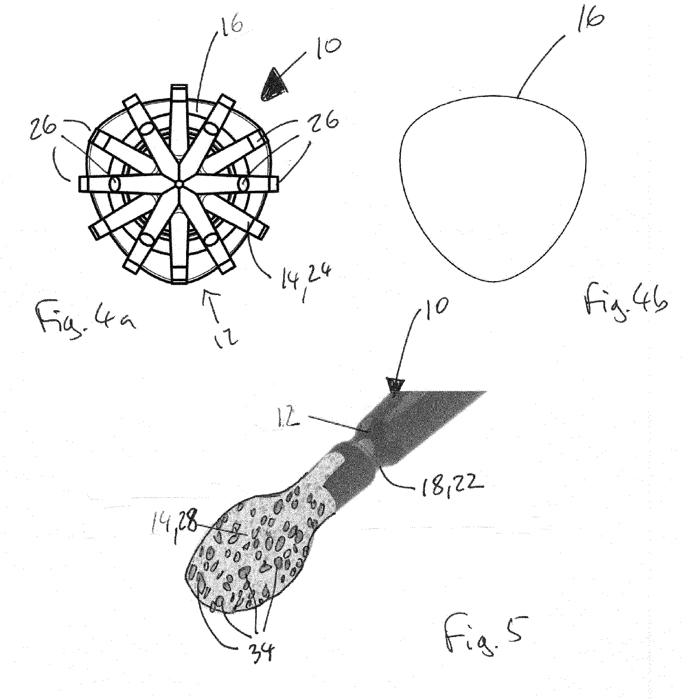

Figs. 4a and 4b show enlarged views of the triangular shape of the applicator 10, with Fig. 4a showing the application tip 14 attached and Fig. 4b showing the application tip 14 removed from the elongate body part 16.

The first kink 18 is arranged at the connecting portion 36, i.e. at that part of the applicator 10 where the applicator head 12 is overmolded onto the elongate body part 16, whereas the second kink 20 is arranged only at the elongate body part 16.

Both the first and second types of centering elements 30, 32 project from an outer surface 42 of the connecting portion 36.

The first type of centering elements 30 are arranged transverse to the second type of centering elements 32 and also transverse to a longitudinal axis A of the applicator 10 that extends in parallel to the main direction of extent of the applicator 10. By arranging the first and second types of centering elements 30, 32 transverse to one another a security against rotation can be improved.

The second type of centering elements 32 are arranged in parallel with the longitudinal axis A of the applicator 10.

The two types of centering elements 30, 32 are arranged axially spaced apart from one another, with the second type of centering elements 32 being arranged between the first type of centering elements 30 and the second kink 22.

In this connection it should be noted that a spacing between the first and second types of centering elements 30, 32 along the longitudinal axis A may be selected in the range of 0.1 to 5 cm, preferably in the range of 0.5 to 3 cm.

In the shown examples two first types of centering elements 30 and two second types of centering elements 32 are provided in respective groups, with each centering element 30, 32 of a respective group being arranged at opposite sides of the elongate body part 16.

In this connection it should be noted that between 1 and 4 of such first and second types of centering elements 30, 32 can respectively be provided, i.e. one of each our of each or one first and four second types of centering elements 30, 32.

The second kink 20 is arranged directly adjacent to that part of the elongate body part 16 that is formed at least substantially by the Reuleaux triangle.

The two kinks 18, 20 are configured to be bent in one direction while being able to be bent at any angle in the radial direction by 360° relative to the longitudinal axis. The triangular shaped body permits the applicator 10 to lie on a flat surface without rolling off and the applicator 10 can be placed onto the flat surface with the application tip 14 facing away from the flat surface, i.e. relative to the elongate body part 16.

The first and second kinks 18, 20 are each configured as a peripherally extending groove 22. The groove 22 can have one of a round, circular, oval, and triangular cross-section transverse to a longitudinal axis A of the applicator 10.

A width of the groove 22 of second kink 20 is larger than a width of the groove 22 of the first kink 20 in a direction transverse to the longitudinal axis A.

In this connection it should be noted that a width of the groove 22 of the second kink 20 can be selected in the range of 1 % to 5 % of a length L of the applicator 10.

In this connection it should further be noted that the second kink 20 is arranged at a length corresponding to 10 to 30 % of a length L of the applicator 10.

In this connection it should be further noted that a width of the groove 22 of the first kink 18 is selected in the range of 0.2 to 1 % of a length of the applicator 10.

In this connection it should further be noted that the first kink 18 is arranged at a length corresponding to 2 to 10 % of a length L of the applicator 10.

Fig. 5 shows a view of a further applicator 10, with a foam application tip 14 made from an open cell foam having pores 34. The material of the application tip 14 made of foam may be one of polyethylene (PE), polypropylene (PP), poly vinyl chloride (PVC), polyurethane (PU), polystyrene (PS) and combinations of the foregoing.

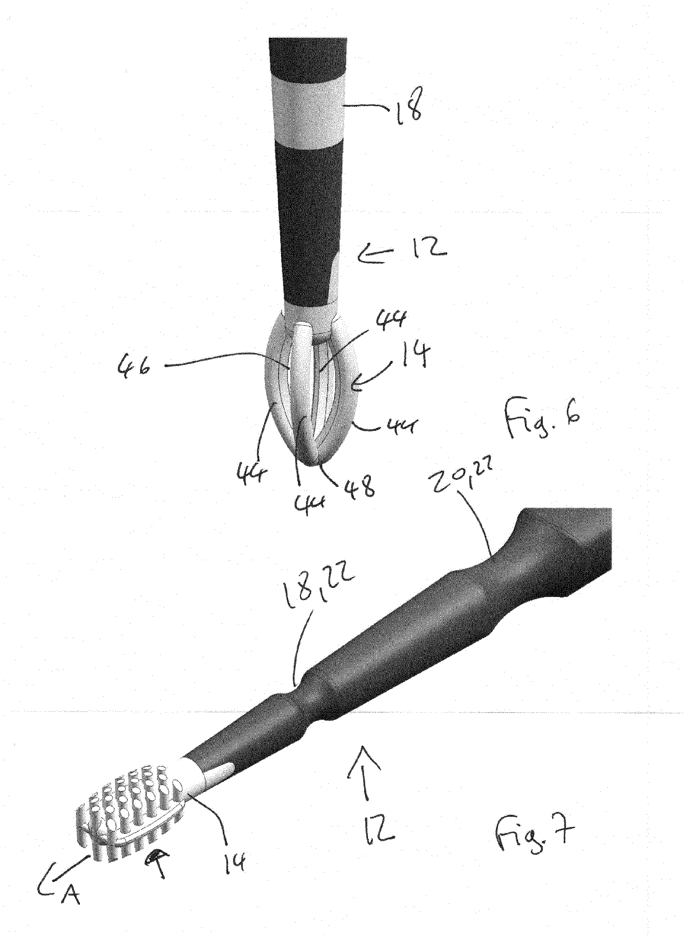

Fig. 6 shows a view of yet a further applicator head 12. The application tip 14 has four claws 44 that form a cage 46 in which a fluid may be collected on use of the applicator 10 of Fig. 6.

The claws 44 are connected at each end to one another and are curved in shape and merge into a tip 48 at a most distal point of the applicator 10.

Fig. 7 shows a view of yet a further applicator head 12. The application tip 14 is a brush 24 with bristles 26. In contrast to the brush 24 with bristles 26 shown in connection with Figs. 1 to 4, the bristles 26 extend in parallel to one another and only in two directions that are oppositely disposed with respect to the longitudinal axis A rather than radially with respect to the longitudinal axis A.

A method of forming the applicator 10 may comprise the steps of injection molding the elongate body part 16 and then injection molding the applicator head 12 over and onto parts of the elongate body part 16.

On using the applicator 10 a user can decide where the applicator 10 is intended to be used and then bend the application tip 14 relative to the elongate body part 16 at least once at one of the first and second kinks 18, 20 prior to using the application tip 14 even at hard to reach target cites.

### List of reference numerals:

- 10: applicator
- 12: applicator head
- 14: application tip
- 16: elongate body part
- 18: first kink
- 20: second kink
- 22: groove
- 24: brush
- 26: bristles
- 28: foam
- 30: first type of centering element
- 32: second type of centering element
- 34: pores
- 36: connecting portion
- 38: rear end of 16
- 40: front end of 16
- 42: outer surface of 36
- 44: claws

- A: longitudinal axis
- L: length of 16

## Claims

1. An applicator (10), in particular a dental applicator, the applicator (10) comprising an applicator head (12) with an application tip (14) and an elongate body part (16), wherein the applicator (10) is made from two parts (16, 12) of different material and comprises two kinks (18, 20), with one of the two kinks (18) being arranged at a part of the applicator (10) where the two different parts (12, 16) at least partially overlap one another.

2. The applicator (10) according to claim 1, wherein one of the two parts made from a different material is the elongate body part (16) and the other of the two parts (16, 12) made from a different material is the applicator head (12), in particular wherein some of the applicator head (12) overlaps some of the elongate body part (16).

3. The applicator (10) according to claim 1 or claim 2, wherein a cross-section of the elongate body part (16) along at least a majority of a length (L) of the elongate body part (16) is at least substantially formed by one of a triangle and a Reuleaux triangle.

4. The applicator (10) according to one of the preceding claims 1 to 3,
wherein the application tip (14) comprises one of a brush (24) with bristles (26) and a foam (28); and/or
wherein the application tip (14) is configured to store a liquid thereat.

5. The applicator (10) according to claim 3, wherein one the two kinks (18, 20) is arranged directly adjacent to that part of the elongate body part (16) that is formed at least substantially by the Reuleaux triangle.

6. The applicator (10) according to one of the preceding claims 1 to 5,
wherein the application tip (14) is a brush (24) with bristles (26), with the brush (24) and bristles (26) being formed by at least one of a thermoplastic elastomer (TPE), a thermoplastic polyurethane (TPU), a thermoplastic vulcanizate (TPV), and a thermoplastic olefin elastomer (TPO).

7. The applicator (10) according to one of the preceding claims 1 to 6,
wherein the two kinks (18, 20) are configured to be bent in one direction, in particular in only direction, especially such that the application tip (14) faces upwardly relative to the elongate body part (16).

8. The applicator (10) according to one of the preceding claims 1 to 7,
wherein at least one of the two kinks (18, 20) is configured as a peripherally extending groove (22), in particular wherein the groove (22) has a round, circular, oval, triangular cross-section transverse to a longitudinal axis (A) of the applicator (10).

9. The applicator (10) according to one of the preceding claims 1 to 8,
wherein the applicator head (12) is made from a material different from the elongate body part (16).

10. The applicator (10) according to one of the preceding claims 1 to 9,
wherein the elongate body part (16) is made from one of polypropylene (PP) and polylactide (PLA).

11. The applicator (10) according to one of the preceding claims 1 to 10,
wherein the applicator head (12) comprises a material selected from the group of members consisting of a thermoplastic elastomer (TPE), a thermoplastic polyurethane (TPU), a thermoplastic vulcanizate (TPV), a thermoplastic olefin elastomer (TPO), polyethylene (PE), polypropylene (PP), poly vinyl chloride (PVC), polyurethane (PU), polystyrene (PS) and combinations of the foregoing.

12. The applicator (10) according to one of the preceding claims 1 to 11,
wherein the applicator head (12) is configured to receive a part of the elongate body part (16).

13. The applicator (10) according to claim 12, wherein the part of the elongate body part (16) received within the applicator head (12) comprises one or more centering elements (30, 32) in particular wherein two groups of centering elements (30, 32) are provided that are axially spaced apart from one another; and/or
wherein one of the kinks (18) is arranged at that part of the applicator head (12) and that part of the elongate body part (16) that is received within the applicator head (12); and/or
wherein the elongate body part comprises features (30, 32) providing a security against rotation for the applicator head (12) with respect to the elongate body part (16).

14. The applicator (10) according to one of the preceding claims 1 to 5 and 7 to 13, wherein the application tip (14) is a foam application tip (14) made from an open cell foam having pores (34).

15. A method of forming an applicator (10), in particular a dental applicator, the applicator (10) comprising an applicator head (12) with an application tip (14) and an elongate body part (16), wherein the applicator (10) is made from two parts of different material and comprises two kinks (18, 20), with one of the two kinks (18, 20) being arranged at a part of the applicator (10) where the two different parts at least partially overlap one another, the method comprising the steps of injection molding the elongate body part (16) and then injection molding the applicator head (12) with parts of the applicator head (12) being overmolded onto parts of the elongate body part (16).
